# EUROPEAN PATENT APPLICATION

(11) **EP 2 045 865 A1**
(43) Date of publication of application: **08.04.2009**
(21) Application number: 07745164.9
(22) Date of filing: 13.06.2007
(51) Int. Cl.: H01M 8/06, H01M 8/04, H01M 8/10

(54) **FUEL CARTRIDGE FOR FUEL CELL AND FUEL CELL**

(30) Priority: 15.06.2006 JP 2006166047
(71) Applicant: Kabushiki Kaisha Toshiba, Minato-ku, Tokyo 105-8001 (JP)
(72) Inventor: TAKIZAWA, Yumiko, Minato-ku, Tokyo 105-8001 (JP)
(74) Representative: Henkel, Feiler & Hänzel
(86) International application number: PCT/JP2007/061897
(87) International publication number: WO 2007/145244

(57) **Abstract**

A fuel cartridge 5 for a fuel cell, comprising a fuel receiving container 8 and liquid fuel to be received in the container 8, wherein the liquid fuel contains at least one type selected from the group consisting of methanol, ethanol and dimethyl ether and at least one organic compound selected from the group consisting of formic acid, formaldehyde, methyl formate, ethyl formate, methyl acetate and ethyl acetate, and a concentration of the organic compound is 40 ppm or more and 1500 ppm or less.

## Description

### Technical Field

The present invention relates to a fuel cartridge for fuel cell and a fuel cell.

### Background Art

In recent years, various electronic devices such as personal computers and portable telephones have been miniaturized with the development of semiconductor technologies and attempts have been made to use fuel cells for power sources of these miniaturized devices. The fuel cell has the advantage that it can generate electricity only by supplying fuel and an oxidizer and also, it can generate electricity continuously if only the fuel is exchanged. It may be said that the fuel cell is a very advantageous system to operate portable electronic devices if it is small-sized. Particularly, a direct methanol fuel cell (DMFC) uses, as the fuel, methanol having a high energy density and can draw current directly from methanol on the electrode catalyst. Therefore, it requires no reformer and can be small-sized. Also, in the direct methanol fuel cell, the fuel is handled more easily than gaseous hydrogen fuel. From the above facts, the direct methanol fuel cell is a promising power source for small devices.

As to the method of supplying fuel in the DMFC, the following types are known: for example, a gas-supply-type DMFC in which liquid fuel is fed to the inside of the fuel cell by using a blower or the like after it is gasified, a liquid-supply-type DMFC in which liquid fuel is fed to the inside of the fuel cell as it is by the pump or the like and an internal-gasification-type DMFC in which liquid fuel is gasified in the fuel cell and used. Among these DMFCs, the internal-gasification-type DMFC requires no large-scale equipment such as a pump and blower for supplying fuel and therefore a small-sized fuel cell having high energy density can be attained on the premise that fuel can be concentrated to attain the formation of a small-sized liquid fuel tank.

In the meantime, Jpn. Pat. Appln. KOKAI Publication No. 2004-311163 describes that in order to prevent the oxidation of ethanol or methanol which is used for the catalyst slurry used to obtain the electrode of a fuel cell, an antioxidant is added to the catalyst slurry to thereby limit the concentration of an organic compound component (formic acid, acetic acid and oxalic acid) contained in the catalyst layer to 200 ppm or less, thereby restricting the voltage deterioration of the catalyst electrode assembly.

### Disclosure of Invention

It is an object of the present invention to provide a fuel cartridge for fuel cell enabling an improvement in the long-term stability of power generation and also to provide a fuel cell.

According to an aspect of the present invention, there is provided a fuel cartridge for a fuel cell, comprising a fuel receiving container and liquid fuel to be received in the container,
wherein the liquid fuel contains at least one type selected from the group consisting of methanol, ethanol and dimethyl ether and at least one organic compound selected from the group consisting of formic acid, formaldehyde, methyl formate, ethyl formate, methyl acetate and ethyl acetate, and a concentration of the organic compound is 40 ppm or more and 1500 ppm or less.

According to another aspect of the present invention, there is provided a fuel cell comprising:
a membrane electrode assembly including a fuel electrode, an oxidizing agent electrode and an electrolyte membrane interposed between the fuel electrode and the oxidizing agent electrode;
a fuel storage section which stores liquid fuel containing at least one type selected from the group consisting of methanol, ethanol and dimethyl ether; and
a gasified fuel supply section which supplies a gasified component of the liquid fuel to the fuel electrode,
wherein at least one organic compound selected from the group consisting of formic acid, formaldehyde, methyl formate, ethyl formate, methyl acetate and ethyl acetate is contained in the fuel storage section, the gasified fuel supply section and the membrane electrode assembly in an amount larger than 200 ppm and 1500 ppm or less.

### Brief Description of Drawings

FIG. 1 is a typical view showing a direct methanol fuel cell according to an embodiment of the present invention.
FIG. 2 is a sectional view typically showing an embodiment of a fuel cell body shown in FIG. 1.
FIG. 3 is a characteristic view showing a change in output retentivity in a long-term test of each fuel cell obtained in Examples 1 to 3 and Comparative Examples 1 and 2.
FIG. 4 is a characteristic view showing the relation between the concentration of an organic compound and the ratio of initial output density in each fuel cell obtained in Examples 1 and 3 to 13 and Comparative Examples 2 to 9.
FIG. 5 is a characteristic view showing an initial current-voltage characteristic in each fuel cell obtained in Examples 1, 6 and 10 and Comparative Example 6.

### Best Mode for Carrying Out the Invention

The fuel cartridge will be explained.

Examples of the fuel cartridge may include those having a liquid fuel receiving container and a liquid fuel discharge part provided in the container. The fuel cartridge may be either a type which is mounted in a freely dismountable manner or a fixed type which can be replenished with fuel.

Examples of polymer materials used to form the liquid fuel receiving container may include a low-density polyethylene (LDPE), linear low-density polyethylene (LLDPE), denatured polyethylene, polypropylene (PP), polyamide (PA) and polyethylene terephthalate (PET).

The liquid fuel contains at least one organic fuel selected from the group consisting of methanol, ethanol and dimethyl ether. The liquid fuel may be substantially constituted of the above organic fuel or an aqueous solution of organic fuel. When, for example, methanol is selected as the organic fuel, a methanol fuel consisting of an aqueous methanol solution or pure methanol may be used. The concentration of methanol in the liquid fuel is desirably 50 mol% or more, more desirably a concentration exceeding 50 mol% and even more preferably 80 mol% or more and it is even more preferable to use pure methanol. This ensures that the liquid fuel receiving section can be small-sized and the energy density can be increased. The purity of pure methanol is preferably made to be 95% by weight or more and 100% by weight or less.

The liquid fuel contains at least one organic compound selected from the group consisting of formic acid, formaldehyde, methyl formate, ethyl formate, methyl acetate and ethyl acetate in an amount of 40 ppm or more and 1500 ppm or less. In the case where two or more types of organic compounds are contained in the liquid fuel, the sum of the concentrations of these organic compounds is used as the concentration of the organic compound.

The reason why the concentration of the organic compound is defined in the above range will be explained.

The above types of organic compounds are organic impurities produced as byproducts in the power generation. These organic compounds are accumulated in the membrane electrode assembly (MEA) along with the progress of a power generation reaction and therefore bring about a rise in resistance and are causes of the clogging of the gas diffusing layer of the electrode. The inventors of the present invention have made earnest studies and as a result, found that when a small amount of these organic compounds are made to exist in the fuel cartridge in advance, the reaction for the generation of organic compounds in the power generation is limited, and clarified that the long-term stability can be improved when the concentration of these organic compounds is 40 ppm or more. In this case when the concentration exceeds 1500 ppm, there is a risk that high output is not obtained because of a rise in resistance and a reduction in gas diffusibility.

Therefore, the concentration of organic compounds (organic impurities) is designed to be 40 ppm or more and 1500 ppm or less, thereby making possible to improve the long-term stability while maintaining high power output. The concentration is preferably in range from 40 to 200 ppm.

A method of measuring the concentration of these organic compounds will be explained.

The concentrations of organic compounds (formaldehyde, methyl formate, ethyl formate, methyl acetate and ethyl acetate) other than organic acids in the liquid fuel are measured in method 1 explained below.
(1) The analysis is made by gas chromatography (GC). As the analytical column, DB-WAX (30m x 0.25 mmΦ) or a column having a function equivalent to this is used. The injection temperature is 200°C, and the column temperature is made to vary in multistage in a range from 40 to 180°C to carry out analysis, wherein the temperature rise rate is designed to be in a range from 4 to 10°C per min. in a first stage and in a range from 15 to 20°C per min. in a second stage. The detection is made by the FID detector of the GC analyzer.
   When the existential ratio of a specific component in the GC is 50% or more, the organic compound is regarded as a single component constituted of the specific component to calculate the concentration. The existential ratio is calculated from the peak area of the GC.
   When the organic compound is constituted of many components including no specific component having an existential ratio of 50% or more, the organic compound is regarded as HCOOC₂H₅ (ethyl formate) to calculate the concentration.
   The concentration of an organic acid (formic acid) in the liquid fuel is measured by method 2, as follows.
(2) The organic acid is analyzed by diluting a sample 10 to 100 times with ultra-pure water and then analyzing by ion chromatography (IC). As the analytical column, IonPacAG17-AS17 or a column having a function equivalent to this is used. The column temperature is made to be 30°C. The detection is made by using a suppresser system electroconductivity detector.

When the existential ratio of a specific component in the IC is 50% or more, the organic acid is regarded as a single component constituted of the specific component to calculate the concentration. The existential ratio is calculated from the peak area of the IC.

The sum of the concentration of organic compounds other than organic acids which is obtained in the above measurement (1) and the concentration of an organic acid which is obtained in the above measurement (2) is the concentration intended to be found.

Examples of the fuel cell using the fuel cartridge include a liquid fuel supply type and an internal gasification type. In the internal gasification type, a gasified component of the liquid fuel is supplied to the fuel electrode and therefore the organic compound in the liquid fuel is concentrated by the gasification, giving easy rise to problems concerning a rise in resistance and clogging in the fuel gasification section. It is therefore possible to expect an outstanding improvement in characteristics by limiting the concentration of the organic compound.

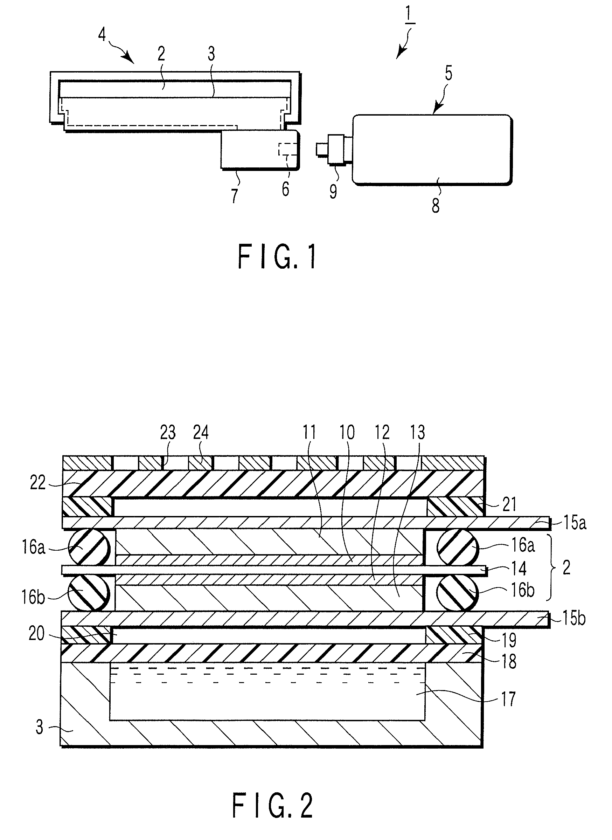

An embodiment of the internal-gasification-type fuel cell is shown in FIG. 1. FIG. 1 is a typical view showing a direct methanol fuel cell according to an embodiment of the present invention.

A fuel cell 1 shown in FIG. 1 is provided with a fuel cell body 4 mainly constituted of a fuel battery cell 2 which is the electromotive section and a fuel tank 3 and a satellite-type (external-injection-type) fuel cartridge 5 that supplies liquid fuel to the fuel tank 3. A fuel supply section 7 having a socket part 6 that is a liquid fuel supply port is disposed on the undersurface of the fuel tank 3. The socket part 6 is provided with a built-in valve mechanism and is put into a closed state except for the time at which the liquid fuel is supplied.

On the other hand, the fuel cartridge 5 is provided with a cartridge body 8 as a liquid fuel receiving container for receiving the liquid fuel for a fuel cell. The cartridge body 8 is provided with a nozzle part 9 at the end thereof, the nozzle part serving as a fuel ejection port when the liquid fuel received therein is supplied to the fuel cell body 4. The nozzle part 9 is provided with a built-in valve mechanism and is put into a closed state except for the time at which the liquid fuel is supplied. The fuel cartridge 5 as mentioned above is connected with the fuel cell body 4 only when the liquid fuel is injected into the fuel tank 3.

The socket part 6 disposed in the fuel tank 3 of the aforementioned fuel cell body 4 and the nozzle part 9 disposed in the cartridge body 8 of the fuel cartridge 5 constitute a pair of couplers.

An embodiment of the fuel cell body 4 constituted mainly of the fuel battery cell 2 and the fuel tank 3 is shown in FIG. 2.

As shown in FIG. 2, a membrane electrode assembly (MEA) as the fuel battery cell 2 is provided with a cathode (air electrode) constituted of a cathode catalyst layer 10 and a cathode gas diffusing layer 11, an anode (fuel electrode) constituted of an anode catalyst layer 12 and an anode gas diffusing layer 13 and a proton conductive electrolyte membrane 14 interposed between the cathode catalyst layer 10 and the anode catalyst layer 12.

Examples of the catalyst contained in the cathode catalyst layer 10 and anode catalyst layer 12 may include single metals (Pt, Ru, Rh, Ir, Os, Pd and the like) which are platinum group elements and alloys containing platinum group elements. It is preferable to use Pt-Ru highly resistant to methanol and carbon monoxide as the anode catalyst, and platinum as the cathode catalyst, though the catalyst material is not limited to these materials. Also, a support catalyst using a conductive support such as a carbon material may be used or a non-support catalyst may be used. As the cathode gas diffusing layer 11 and anode gas diffusing layer 13, for example carbon paper may be used.

Examples of the proton conductive material constituting the proton conductive electrolyte membrane 14 include, though not limited to, fluororesins (for example, a perfluorosulfonic acid polymer) having a sulfonic acid group, hydrocarbon-type resins having a sulfonic acid group and inorganic materials such as tungstic acid and phosphorous-tungstic acid.

The cathode catalyst layer 10 is laminated on the cathode gas diffusing layer 11 and the anode catalyst layer 12 is laminated on the anode gas diffusing layer 13. The cathode gas diffusing layer 11 serves to supply an oxidizer uniformly to the cathode catalyst layer 10 and doubles as the current collector of the cathode catalyst layer 10. The anode gas diffusing layer 13 serves to supply a fuel uniformly to the anode catalyst layer 12 and doubles as the current collector of the anode catalyst layer 12. A cathode conductive layer 15a and an anode conductive layer 15b are in contact with the cathode gas diffusing layer 11 and the anode gas diffusing layer 13 respectively. As the cathode conductive layer 15a and anode conductive layer 15b, a porous layer (for example, a mesh) made of a metal material such as gold or nickel, a foil made of the foregoing metal material or composite material obtained by coating a conductive metal material such as stainless steel (SUS) with a highly conductive metal such as gold may be used.

A cathode seal material 16a having a rectangular frame shape is positioned between the cathode conductive layer 15a and the proton conductive electrolyte membrane 14 and also encloses the periphery of the cathode catalyst layer 10 and cathode gas diffusing layer 11. On the other hand, an anode seal material 16b having a rectangular frame shape is positioned between the anode conductive layer 15b and the proton conductive electrolyte membrane 14 and also encloses the periphery of the anode catalyst layer 12 and anode gas diffusing layer 13. The cathode seal material 16a and the anode seal material 16b are O-rings that prevent each leakage of fuel and an oxidizer from the membrane electrode assembly 2.

A liquid fuel tank 3 is disposed as the fuel storage section below the membrane electrode assembly 2. A liquid fuel 17 is received in the liquid fuel tank 3. A gasified fuel supply section, for example, a gas-liquid separation membrane 18 that supplies the gasified component of the liquid fuel to the anode is disposed between the liquid fuel tank 3 and anode. The gas-liquid separation membrane 18 is a membrane that transmits only the gasified component of the liquid fuel and cannot transmit the liquid fuel. Only the gasified component among the liquid fuel is transmitted through the gas-liquid separation membrane 18, making possible to supply the gasified fuel to the anode. As the gas-liquid separation membrane 18, for example, a water repellent membrane having methanol transmitting ability may be used. Examples of the water-repellent membrane having methanol transmitting ability may include a silicone sheet, polyethylene porous film, polypropylene porous film, polyethylene-polypropylene porous film and polytetrafluoroethylene porous film.

A frame 19 is disposed between the gas-liquid separation membrane 18 and the anode conductive layer 15b. The space enclosed by the frame 19 functions as a gasified fuel storing chamber 20 that regulates the amount of the gasified fuel to be supplied to the anode.

On the other hand, a frame 21 is laminated on the cathode conductive layer 15a of the membrane electrode assembly 2. A moisture retentive plate 22 that inhibits the transpiration of the water produced on the cathode catalyst layer 10 is laminated on the frame 21. The moisture retentive plate 22 functions as a water supply section that supplies the water produced on the cathode to the anode. Specifically, the water retentive plate 22 inhibits the vaporization of water from the cathode and therefore, the amount of water to be retained in the cathode catalyst layer 10 increases along with the progress of a power generation reaction. This leads to a situation where the amount of water to be retained in the cathode catalyst layer 10 is larger than the amount of water to be retained in the anode catalyst layer 12. As a result, the osmotic pressure phenomenon is promoted, so that the water produced on the cathode catalyst layer 10 is supplied to the anode catalyst layer 12 through the proton conductive membrane 14.

The moisture retentive plate 22 is desirably formed of an insulating material which is inert to methanol and has anti-solubility, oxygen permeability and moisture permeability. Examples of such an insulating material may include polyolefins such as a polyethylene and polypropylene.

The moisture retentive plate 22 desirably has an air permeability of 50 s/100 cm³ or less, wherein the air permeability is prescribed in JIS P-8117-1998. This reason is that when the air permeability exceeds 50 s/100 cm³, there is a risk that the diffusion of air from air introduction ports 23 to the cathode is hindered, bringing about the situation where high output is not obtained. The air permeability is more preferably 10 s/100 cm³ or less.

The moisture retentive plate 22 desirably has a moisture permeability of 6000 g/m²·24h or less, wherein the moisture permeability is prescribed in JIS L-1099-1993 A-1 method. The value of the above moisture permeability is a value at a temperature of 40 ± 2°C as shown in the measuring method of JIS L-1099-1993 A-1 method. This reason is that when the moisture permeability exceeds 6000 g/m²·24h, the amount of water to be vaporized from the cathode is increased and there is a risk that the effect of promoting the diffusion of water from the cathode to the anode is insufficiently obtained. Also, when the moisture permeability is less than 500 g/m²·24h, excess water is supplied to the anode and there is therefore a risk that high output is not obtained. Therefore, the moisture permeability is preferably in a range from 500 to 6000 g/m²·24h. The moisture permeability is even more preferably in a range from 1000 to 4000 g/m²·24h.

A cover 24 provided with plural air introduction ports 23 formed to introduce air which is the oxidizing agent is laminated on the moisture retentive plate 22. Because the cover 24 also plays a part in improving the adhesion of the stuck including the membrane electrode assembly 2 by applying pressure to the stuck, it is formed of a metal such as SUS304, carbon steel, stainless steel, alloy steel, titanium alloy and nickel alloy.

In the fuel cell having the structure shown in the above FIGS. 1 and 2, the amount of organic compounds (at least one type selected from the group consisting of formic acid, formaldehyde, methyl formate, ethyl formate, methyl acetate and ethyl acetate) contained in the liquid fuel 17 in the liquid fuel tank 3 which is the fuel storage section, the gas-liquid separation membrane 18 which is the gasified fuel supply section and membrane electrode assembly 2 is designed to be larger than 200 ppm (not including 200 ppm) and 1500 ppm or less. The inventors of the present invention have found that side reactions such as the productions of formaldehyde due to the oxidation of fuel components are suppressed by increasing the amount of the organic compounds to over 200 ppm. As a result, a reduction in the efficiency of a power generation reaction is restricted and the long-term stability can be improved. However, if the amount of the organic compounds exceeds 1500 ppm, this brings about a rise in resistance and is a cause of the clogging of the gas diffusing layer of the electrode, resulting in deteriorated long-term stability. The amount of the organic compounds is preferably in an amount larger than 200 ppm (not including 200 ppm) and 800 ppm or less.

A fuel cell in which the amount of the organic compounds exceeds 200 ppm and is 1500 ppm or less can be obtained by using, for example, the fuel cartridge of the present invention.

With regard to organic compounds having penetrated or adhered to the gas-liquid separation membrane 18 and membrane electrode assembly 2, each member is dipped in a minimum amount of 100% methanol enough to dip the member to thereby dissolve these organic compounds in methanol, thereby analyzing the organic compounds contained in methanol by using above methods 1 and 2. With regard to the liquid fuel 17 in the liquid fuel tank 3, the liquid fuel sampled from the fuel tank 3 is analyzed by above methods 1 and 2. In this case, the analysis is preferably made by operating the fuel cell for 1 to 3 hours and then decomposing the fuel cell to remove the gas-liquid separation membrane, membrane electrode assembly and fuel tank.

Examples of the present invention will be explained in detail with reference to the drawings.

### (Example 1)

### <Production of an anode>

A perfluorocarbon sulfonic acid solution, water and methoxy propanol were added to carbon black carrying an anode catalyst (Pt:Ru = 1:1) to disperse the carbon black carrying a catalyst, thereby preparing a paste. The obtained paste was applied to porous carbon paper as an anode gas diffusing layer to obtain an anode catalyst layer.

### <Production of a cathode>

A perfluorocarbon sulfonic acid solution, water and methoxy propanol were added to carbon black carrying a cathode catalyst (Pt) to disperse the carbon black carrying a catalyst, thereby preparing a paste. The obtained paste was applied to porous carbon paper as a cathode gas diffusing layer to obtain a cathode catalyst layer.

A perfluorocarbon sulfonic acid membrane (Nafion film, manufactured by DuPont) having a moisture content of 10 to 20% by weight was interposed as a proton conductive electrolyte membrane between the anode catalyst layer and the cathode catalyst layer, which was then subjected to hot pressing to obtain a membrane electrode assembly (MEA).

A silicone rubber sheet was prepared as a gas-liquid separation membrane.

The obtained membrane electrode assembly and gas-liquid separation membrane were used to fabricate an internal-gasification-type direct methanol fuel cell having a structure as shown in FIGS. 1 and 2.

Methanol which had a purity of 99.9% by weight and contained 40 ppm of formic acid as the organic compound was put in a fuel cartridge. Using this fuel cartridge, the liquid fuel was supplied to the liquid fuel tank of the fuel cell.

### (Example 2)

An internal-gasification-type direct methanol fuel cell was fabricated which had the same structure as that of Example 1 except that the concentration of the organic compounds in the liquid fuel was changed to 150 ppm.

### (Example 3)

An internal-gasification-type direct methanol fuel cell was fabricated which had the same structure as that of Example 1 except that the concentration of the organic compounds in the liquid fuel was changed to 1500 ppm.

### (Comparative Example 1)

An internal-gasification-type direct methanol fuel cell was fabricated which had the same structure as that of Example 1 except that the concentration of the organic compounds in the liquid fuel was changed to 35 ppm.

### (Comparative Example 2)

An internal-gasification-type direct methanol fuel cell was fabricated which had the same structure as that of Example 1 except that the concentration of the organic compounds in the liquid fuel was changed to 1505 ppm.

After the obtained fuel cell was operated for 3 hours, the concentration of organic compounds retained in the liquid fuel in liquid fuel tank, gas-liquid separation membrane and membrane electrode assembly was measured in the conditions mentioned above. The results are shown in the following Table 1.

**Table 1**

| | Concentration of organic compounds in the liquid fuel contained in the cartridge (ppm) | Concentration of organic compounds in the fuel cell (ppm) |
|---|---|---|
| Example 1 | 40 | 201 |
| Example 2 | 150 | 800 |
| Example 3 | 1500 | 1500 |
| Comparative Example 1 | 35 | 195 |
| Comparative Example 2 | 1505 | 1505 |

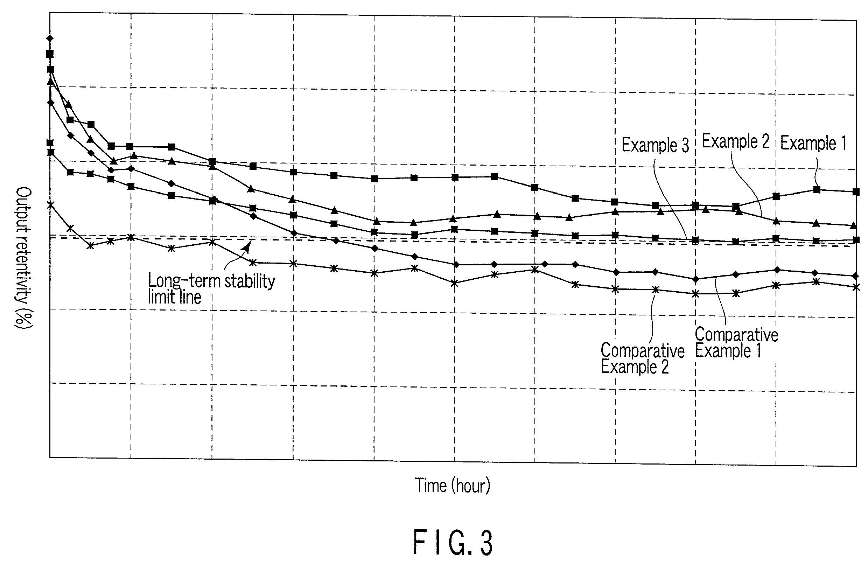

Also, the obtained fuel cell was allowed to operate continuously for 1000 hours. The output as a function of the operating time is shown in FIG. 3 as the output retentivity (%) when the initial output was set to 100%. In FIG. 3, the abscissa represents the operating time (hours) and the ordinate represents the retentivity (%).

As is clear from FIG. 3, each fuel cell obtained in Examples 1 to 3 using a fuel cartridge in which the concentration of organic compounds is 40 ppm or more and 1500 ppm or less could keep a retentivity higher than that shown as the long-term stability limit line during the course of the continuous operation.

In the meantime, the fuel cell of Comparative Example 1 using a fuel cartridge in which the concentration of organic compounds is less than 40 ppm dropped sharply in retentivity after the start of operation. On the other hand, the fuel cell of Comparative Example 2 using a fuel cartridge in which the concentration of organic compounds exceeds 1500 ppm had a retentivity lower than that shown as the long-term stability limit line from just after the start of the operation.

### (Examples 4 to 13, Comparative Examples 3 to 9)

Internal-gasification-type direct methanol fuel cells were fabricated which respectively had the same structure as that of Example 1 except that the type and concentration of the organic compound were changed as shown in Table 2.

**Table 2**

| | Organic compound, type | Concentration of organic compounds in the liquid fuel contained in the cartridge (ppm) | Concentration of organic compounds in the fuel cell (ppm) |
|---|---|---|---|
| Comparative Example 3 | Additive free | 0 | 0 |
| Example 1 | Formic acid | 40 | 201 |
| Example 4 | Formic acid | 100 | 500 |
| Example 5 | Formic acid | 500 | 800 |
| Example 3 | Formic acid | 1500 | 1500 |
| Comparative Example 2 | Formic acid | 1505 | 1505 |
| Example 6 | Formaldehyde | 40 | 201 |
| Example 7 | Formaldehyde | 100 | 500 |
| Example 8 | Formaldehyde | 500 | 800 |
| Example 9 | Formaldehyde | 1500 | 1500 |
| Comparative Example 4 | Formaldehyde | 1505 | 1505 |
| Example 10 | Methyl formate | 40 | 201 |
| Example 11 | Methyl formate | 100 | 500 |
| Example 12 | Methyl formate | 500 | 800 |
| Example 13 | Methyl formate | 1500 | 1500 |
| Comparative Example 5 | Methyl formate | 1505 | 1505 |
| Comparative Example 6 | Methyl methacrylate | 40 | 201 |
| Comparative Example 7 | Methyl methacrylate | 100 | 500 |
| Comparative Example 8 | Methyl methacrylate | 500 | 800 |
| Comparative Example 9 | Methyl methacrylate | 1500 | 1500 |

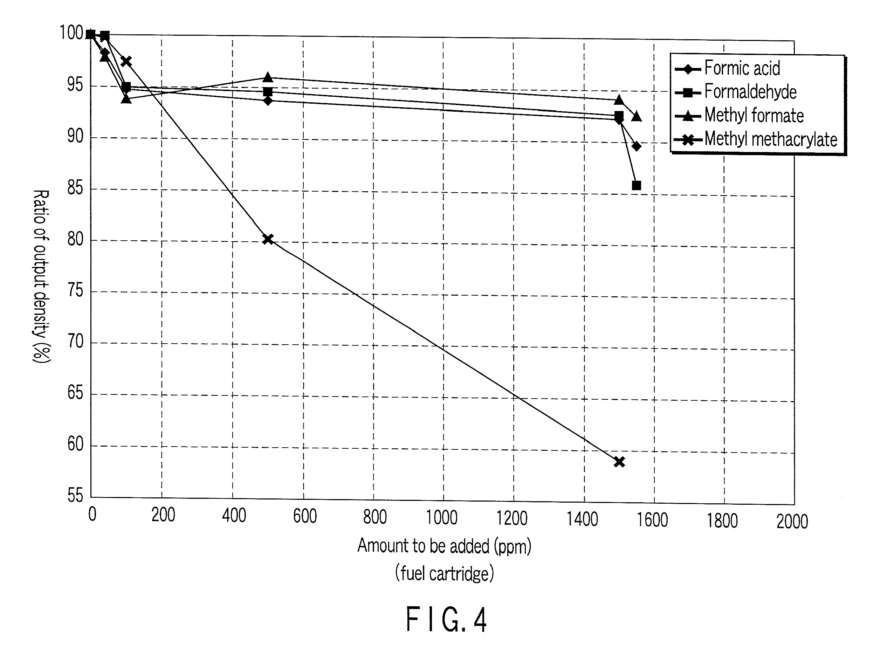

Also, the initial output density of the obtained fuel cell is shown in FIG. 4 as the ratio of output density (%) when the initial output density of Comparative Example 3 was set to 100%. In FIG. 4, the abscissa represents the concentration (ppm) of organic compounds in the liquid fuel contained in the cartridge and the ordinate represents the ratio (%) of the output density. The results of Examples 1 and 3 and Comparative Example 2 are described together in FIG. 4.

As is clear from FIG. 4, it is understood, from a comparison between Examples 1 and 3 to 13 and Comparative Examples 2 to 5 using formic acid, formaldehyde and methyl formate as the organic compound, that a high ratio of output density can be obtained from the start when the concentration of the organic compound is in a range from 40 to 1500 ppm.

In the case of the fuel cells obtained in Comparative Examples 6 to 9 using methyl methacrylate, the ratio of the output density dropped sharply with increase in the concentration of methyl methacrylate.

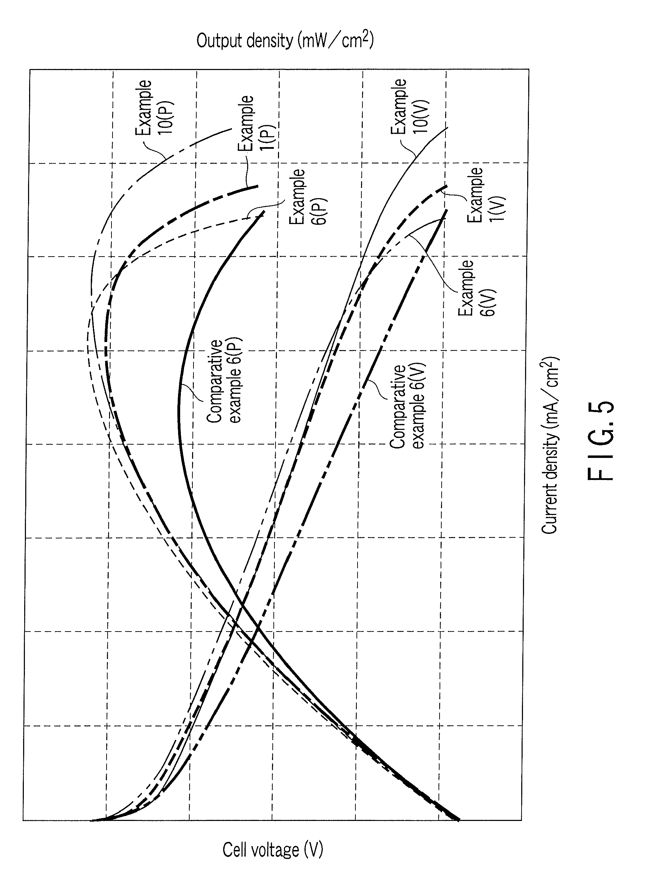

As to each fuel cell of Examples 1, 6 and 10 and Comparative Example 6 using the fuel cartridge filled with a liquid fuel containing organic compounds in a concentration of 40 ppm, the initial current-voltage characteristic was measured. The results are shown in FIG. 5. In FIG. 5, the abscissa represents the current density (mA/cm²), the right ordinate represents the output density (mW/cm²) and the left ordinate represents the cell voltage (V). In FIG. 5, the curves shown by Example 1(P), Example 6(P), Example 10(P) and Comparative Example 6(P) respectively show the output density and the curves shown by Example 1(V), Example 6(V), Example 10(V) and Comparative Example 6(V) respectively show the cell voltage.

As is clear from FIG. 5, it is understood that each fuel cell obtained in Examples 1, 6 and 10 using as the organic compound, formic acid, formaldehyde or methyl formate has a larger peak current density and is more reduced in the drop of cell voltage than the fuel cell of Comparative Example 6 using methyl methacrylate.

As shown in the results of FIGS. 3 to 5, the long-term stability could be improved without impairing the initial current-voltage characteristic and output density in this embodiment. It has been confirmed that the same effect is also obtained when ethyl formate, methyl acetate or ethyl acetate is used as the organic compound.

Each of the above embodiments as it stands is not described to limit the present invention and the structural elements may be modified and embodied without departing from the spirit of the present invention in the practical stage of the present invention. Also, various inventions can be made by a proper combination of plural structural elements disclosed in the above embodiments. For instance, some structural elements may be eliminated from among the structural elements shown in these embodiments. Moreover, the structural elements used in different embodiments may be appropriately combined.

For example, in the above explanations, the structure provided with the fuel tank as the fuel storage section on the lower part of the membrane electrode assembly (MEA) is explained as the structure of the fuel cell. However, the fuel storage section may be provided with a fuel receiving section filled with liquid fuel and a passage connected from the fuel receiving section to the membrane electrode assembly. In this case, the fuel is supplied from the fuel receiving section to the membrane electrode assembly through a passage.

Also, the above explanations of the structure of the fuel cell body are furnished taking a passive-type fuel cell as an example. However, the present invention may be applied to a fuel cell called a semi-passive type using a pump as a part of fuel supply section. In the semi-passive-type fuel cell, fuel supplied from the fuel receiving section to the MEA is used in a power generating reaction and the fuel that is not used at this time is neither circulated nor returned to the fuel receiving section. Because the fuel is not circulated in the semi-passive-type fuel cell, the semi-passive-type fuel cell is different from the active type and does not adversely affect, for example, the miniaturization of the device. Also, the semi-passive-type fuel cell uses a pump to supply fuel and is therefore also different from a purely passive type such as the internal gasification type. This is the reason why it is called the semi-passive type. It is to be noted that in this semi-passive-type fuel cell, a structure in which a fuel shutdown valve is arranged in place of the pump may be adopted insofar as it is a structure in which the fuel is supplied from the fuel receiving section to the MEA. In this case, the fuel shutdown valve is installed to control the supply of the liquid fuel through the passage.

Also, as to the vapor of the liquid fuel to be supplied to the MEA, the vapor of all liquid fuel may be supplied. However, the present invention may be applied to the case where a part of the fuel is supplied in the form of a liquid.

### Industrial Application

According to the present invention, a fuel cartridge for fuel cell and a fuel cell which can improve the long-term stability of power generation can be provided.

## Claims

1. A fuel cartridge for a fuel cell, comprising a fuel receiving container and liquid fuel to be received in the container,
wherein the liquid fuel contains at least one type selected from the group consisting of methanol, ethanol and dimethyl ether and at least one organic compound selected from the group consisting of formic acid, formaldehyde, methyl formate, ethyl formate, methyl acetate and ethyl acetate, and a concentration of the organic compound is 40 ppm or more and 1500 ppm or less.

2. The fuel cartridge for a fuel cell according to claim 1, wherein the liquid fuel contains methanol fuel and the organic compound.

3. The fuel cartridge for a fuel cell according to claim 2, wherein the methanol fuel is an aqueous methanol solution having a methanol concentration of 80 mol% or more or pure methanol.

4. A fuel cell comprising:
a membrane electrode assembly including a fuel electrode, an oxidizing agent electrode and an electrolyte membrane interposed between the fuel electrode and the oxidizing agent electrode;
a fuel storage section which stores liquid fuel containing at least one type selected from the group consisting of methanol, ethanol and dimethyl ether; and
a gasified fuel supply section which supplies a gasified component of the liquid fuel to the fuel electrode,
wherein at least one organic compound selected from the group consisting of formic acid, formaldehyde, methyl formate, ethyl formate, methyl acetate and ethyl acetate is contained in the fuel storage section, the gasified fuel supply section and the membrane electrode assembly in an amount larger than 200 ppm and 1500 ppm or less.

5. The fuel cell according to claim 4, wherein the liquid fuel contains methanol fuel and the organic compound.

6. The fuel cell according to claim 5, wherein the methanol fuel is an aqueous methanol solution having a methanol concentration of 80 mol% or more or pure methanol.
